# EUROPÄISCHE PATENTSCHRIFT

(11) **EP 3 996 967 B1**
(45) Veröffentlichungstag und Bekanntmachung des Hinweises auf die Patenterteilung: **03.09.2025**
(21) Anmeldenummer: 20721478.4
(22) Anmeldetag: 17.04.2020
(51) Int. Cl.: B61L 23/04, B61L 25/02, G06V 10/75, G06V 20/56

(54) **SCHIENENERKENNUNG MIT LIDAR**
RAIL RECOGNITION USING LIDAR
RECONNAISSANCE DES RAILS PAR LIDAR

(30) Priorität: 09.08.2019 DE 102019212010
(43) Veröffentlichungstag der Anmeldung: 18.05.2022
(73) Patentinhaber: Siemens Mobility GmbH, 81739 München (DE)
(72) Erfinder: PALMER, Andrew, 10245 Berlin (DE)
(74) Vertreter: Siemens Patent Attorneys
(86) Internationale Anmeldenummer: PCT/EP2020/060905
(87) Internationale Veröffentlichungsnummer: WO 2021/028082

(56) Entgegenhaltungen:
- WO-A2-2016/118672
- US-A1- 2009 037 039
- MOSTAFA ARASTOUNIA: "Automated Recognition of Railroad Infrastructure in Rural Areas from LIDAR Data", REMOTE SENSING, vol. 7, no. 11, 6 November 2015 (2015-11-06), pages 14916 - 14938, XP055484505, DOI: 10.3390/rs71114916
- SONIA FERNADEZ-RODRIGUEZ ET AL: "Recognition of 2D-objects using RANSAC Contents", 1 May 2008 (2008-05-01), XP055710391, Retrieved from the Internet <URL:https://research.shu.ac.uk/aces/guardians/report_rodriguez.pdf> [retrieved on 20200630]

## Beschreibung

Die Erfindung betrifft ein Verfahren zur Schienenerkennung mit Lidar. Bei dem Verfahren werden Punktdaten durch eine Lidar-Einheit von einem Frontbereich vor dem Schienenfahrzeug erfasst. Außerdem betrifft die Erfindung eine Schienenerkennungseinrichtung. Überdies betrifft die Erfindung ein Schienenfahrzeug.

Schienenerkennung kann bei unterschiedlichen Problemstellungen des autonomen Fahrens nützlich sein. Beispielsweise ist die Schienenerkennung für die Signalerkennung wichtig, da dabei ermittelt wird, welches Signal relevant für das Fahrzeug ist. Auch bei der Hinderniserkennung spielt die Schienenerkennung eine Rolle, denn dabei muss ermittelt werden, ob ein Objekt mit dem Pfad des Schienenfahrzeugs in Kontakt kommt oder nicht. Ebenso spielt die Schienenerkennung bei der Lokalisierung eines Schienenfahrzeugs eine Rolle, insbesondere dann, wenn dabei ermittelt werden soll, auf welchem Gleis sich ein Schienenfahrzeug gerade befindet oder ob es sich in der Nähe einer Weiche aufhält.

Herkömmlich wird zur Schienenerkennung eine Karte in Verbindung mit einer bekannten Position des Fahrzeugs genutzt, um den nachfolgenden Pfad des Fahrzeugs zu ermitteln. Diese Vorgehensweise hat folgende Nachteile:
- Wenn die Position des Schienenfahrzeugs nicht bis zu einem hohen Genauigkeitsgrad bekannt ist, kann der projizierte Pfad mit Sensordaten falsch in Verbindung gebracht werden, was zu falschpositiven oder falschnegativen Ergebnissen führt, insbesondere bei der Hinderniserkennung.
- Die Karte muss ständig aktualisiert werden.

Bei der Schienenerkennung mit Hilfe von Kameras tritt das Problem auf, dass die dabei erfassten Bilder keine Tiefeninformation aufweisen. Daher kann es passieren, dass wenn die detektierten Schienen in 3D-Sensordaten projiziert werden, ein Tiefenfehler in dem projizierten Pfad auftritt, was zu falschpositiven oder falschnegativen Ergebnissen bei der Hinderniserkennung führen kann.

Es wurde bereits Schienenerkennung mit Lidar zu realisieren versucht. Dabei wurde das Lidarsystem nahe an der Schiene positioniert, so dass der Verlauf der Schienen leicht ermittelbar war. Allerdings erhöht sich die Anzahl der Punkte in einer Punktwolke dramatisch, wenn ein größerer Bereich vor einem Schienenfahrzeug überwacht werden soll. Auch die typischerweise erfassten Merkmale, wie zum Beispiel die Höhendifferenz oder die Intensitätsdifferenz zwischen benachbarten Punkten in einer Aufnahme, sind umso schwerer zu ermitteln, je weiter entfernt sich Lidarpunkte von den Sensoren befinden, was bei einer Überwachung eines größeren Bereichs vor einem Schienenfahrzeug der Fall ist.

Aus WO 2016/118672 A2 sind ein Verfahren und eine Vorrichtung für das maschinelle Sehen in Echtzeit und die Analyse von Punktwolkendaten zur Fernerkundung und Fahrzeugsteuerung bekannt. Punktwolkendaten können über skalierbare, zentralisierte Cloud-Computing-Systeme analysiert werden, um Asset-Informationen zu extrahieren und semantische Karten zu erstellen. Ein Datenspeicher/Vorprozessor unterteilt einen Datensatz für das Streamen zu einer verteilten Verarbeitungseinheit und den Betrieb über Datenanalysemechanismen. Die Ausgabe der Verarbeitungseinheit wird von einem Kartengenerator aggregiert. Machine-Learning-Komponenten können Datenanalysemechanismen optimieren, um die Asset- und Merkmalsextraktion aus Sensordaten zu verbessern. Optimierte Datenanalysemechanismen können zur Verwendung in Bordsystemen, die Fahrzeugsensordaten analysieren, auf Fahrzeuge heruntergeladen werden. Semantische Kartendaten können zusammen mit Onboard-Sensoren lokal in Fahrzeugen verwendet werden, um eine genaue Fahrzeuglokalisierung abzuleiten und Eingaben für Fahrzeugsteuerungssysteme bereitzustellen.

MOSTAFA ARASTOUNIA: "Automated Recognition of Railroad Infrastructure in Rural Areas from LIDAR Data", REMOTE SENSING, Bd. 7, Nr. 11, 6. November 2015 (2015-11-06), Seiten 14916-14938, XP055484505, DOI: 10.3390/rs71114916, offenbart ein automatisiertes Verfahren zur Erkennung von Eisenbahninfrastruktur aus 3D-LIDAR-Daten. Eisenbahninfrastruktur schließt dabei Gleise, Fahrdrähte, Tragseile, Masten und Ausleger ein. Der verwendete LIDAR-Datensatz wurde durch das mobile Kartographiersystem "Optech Lynx" erfasst, welches auf einem bei 125 km/h betriebenen Schienenfahrzeug montiert wurde. Mittels des Erkennungsverfahrens wurden Schlüsselkomponenten Die Ergebnisse sind als sowohl auf Objektebene als auch auf Punktwolkenebene dargestellt.

Es besteht also die Aufgabe, ein Verfahren und eine Vorrichtung zur Schienenerkennung mit verbesserter Zuverlässigkeit bereitzustellen.

Diese Aufgabe wird durch ein Verfahren zur Schienenerkennung von einem Schienenfahrzeug aus gemäß Patentanspruch 1, eine Schienenerkennungseinrichtung gemäß Patentanspruch 9, und ein Schienenfahrzeug gemäß Patentanspruch 10 gelöst.

Bei dem erfindungsgemäßen Verfahren zur Schienenerkennung von einem Schienenfahrzeug aus werden Punktdaten von einem Frontbereich vor dem Schienenfahrzeug durch eine Lidar-Einheit erfasst. Die Punktdaten bilden eine Punktwolke, welche die Umgebung des Schienenfahrzeugs darstellt. Der Frontbereich kann durch eine Lidar-Einheit zum Beispiel ringförmig abgetastet werden, wobei jeder Lidarring einen unterschiedlichen Abstand zum Sensor aufweist. Die Lidar-Einheit ist vorzugsweise bordseitig angeordnet. Vorteilhaft wird dadurch im Gegensatz zu infrastrukturseitig angeordneten Lidar-Einheiten nur eine einzige Lidar-Einheit für die Schienenerkennung für ein Schienenfahrzeug benötigt. Es wird weiterhin ein Bildausschnitt auf Basis der Punktdaten ermittelt, welcher einen Schienenstrang umfasst. Durch die Wahl eines kleineren Bildausschnitts kann die Menge der zu verarbeitenden Bildpunkte reduziert werden. Außerdem werden Kandidatenpunkte in dem Bildausschnitt ermittelt. Schließlich wird ein Schienenmodell auf Basis der Kandidatenpunkte ermitteln, in dem das Modell bzw. durch das Modell definierte Schienenlinien an die Kandidatenpunkte angepasst werden. Bei der Anpassung werden Kandidatenpunkte verworfen, die nicht modellkonform sind. Beispielsweise werden Kandidatenpunkte, die sich außerhalb des zu erwartenden Bereichs eines Schienenstrangs befinden, verworfen. Das Verfahren eignet sich auch für die Detektion von Schienen über große Entfernungen, da die Menge der zu verarbeitenden Daten bei den einzelnen Schritten, insbesondere durch die Wahl eines Bildausschnitts und das Setzen der Kandidatenpunkte stark reduziert wird und das Problem einer zu großen Punktmenge und des damit verbundenen Datenverarbeitungsaufwands damit gelöst wird. Die Wahl des Bildausschnitts erfolgt auf Basis von vorbekannten Schienenparametern, welche die mögliche Position bzw. Lage der Schienen im Raum einschränken. Anders ausgedrückt ist für einzelne Schienenparameter ein Wertebereich bekannt, in dem sich die Werte der genannten Schienenparameter befinden. Anhand der bekannten Minimalwerte und Maximalwerte dieser Parameter kann ein räumlicher Bereich und damit auch ein Bildbereich ermittelt werden, in dem sich die Schienen befinden müssen. Die genannten Werte der Schienenparameter können zum Beispiel durch Vorschriften aufgrund von Sicherheitsüberlegungen festgelegt sein. Beispielshalber seien hier die maximale Kurvenkrümmung, eine maximale Steigung oder ein maximales Gefälle und ähnliches erwähnt. Es wird bei der Ermittlung von Kandidatenpunkten ermittelt, ob Punkte mit sehr unterschiedlichen x-y-Werten (die x-y-Ebene liegt senk-recht auf dem Schwerkraftvektor), aber ohne große Höhenunter-schiede, auf demselben Lidarring auftreten. Vorteilhaft können damit auch Kandidatenpunkte in größerer Entfernung, insbesondere in Kurven ermittelt werden, bei denen Höhenunterschiede zwischen Schienen und der Umgebung nur schwer erkannt werden können. Dieser Effekt beruht darauf, dass der Lidarstrahl in größeren Entfernungen aufgrund des kleineren Winkels, unter dem der Lidarstrahl dort auf die Schienen auftrifft, insbesondere in Kurven, häufiger die Seitenflächen der Schienen trifft als deren Oberseite, da in einem solchen Fall die Seitenflächen unter einem flachen Winkel deutlich größer erscheinen als die Flächen der Oberseite der Schienen. Der letzte Punkt, der die Schienen noch trifft, ist dann zu dem nächsten Punkt auf demselben Lidarring, der die Schienen nicht mehr trifft, weiter entfernt als in der Nähe des Sensors, was zur Detektion der Schienen in weiter Entfernung genutzt werden kann. D.h., es können große Abstände zwischen benachbarten Punkten desselben Lidarrings als Indiz für eine Schiene genutzt werden.

Die erfindungsgemäße Schienenerkennungseinrichtung weist eine Lidar-Einheit zum Erfassen von Abtastdaten auf. Teil der erfindungsgemäßen Schienenerkennungseinrichtung ist auch eine Festlegungseinheit zum Ermitteln eines Bildausschnitts, welcher einen Schienenstrang umfasst. Die erfindungsgemäße Schienenerkennungseinrichtung umfasst auch eine Punktermittlungseinheit zum Ermitteln von Kandidatenpunkten in dem Bildausschnitt. Zudem weist die erfindungsgemäße Schienenerkennungseinrichtung eine Modellierungseinheit zum Anpassen eines Schienenmodells auf Basis der Kandidatenpunkte auf, wobei Kandidatenpunkte in Abhängigkeit davon ermittelt werden, ob Abtastpunkte mit sehr unterschiedlichen x-y-Werten aber demselben Höhenwert und auf demselben Lidarring auftreten. Die erfindungsgemäße Schienenerkennungseinrichtung teilt die Vorteile des erfindungsgemäßen Verfahrens zur Schienenerkennung von einem Schienenfahrzeug aus.

Das erfindungsgemäße Schienenfahrzeug weist die erfindungsgemäße Schienenerkennungseinrichtung auf. Das erfindungsgemäße Schienenfahrzeug teilt die Vorteile der erfindungsgemäßen Schienenerkennungseinrichtung.

Eine weitgehend softwaremäßige Realisierung hat den Vorteil, dass auch schon bisher verwendete Steuereinrichtungen von Schienenfahrzeugen, gegebenenfalls nach einer Nachrüstung mit einer Lidar-Einheit, auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer solchen Steuereinrichtung ladbar ist, mit Programmabschnitten, um alle Schritte des erfindungsgemäßen Verfahrens auszuführen, wenn das Programm in der Steuereinrichtung ausgeführt wird. Ein solches Computerprogrammprodukt kann neben dem Computerprogramm gegebenenfalls zusätzliche Bestandteile wie z. B. eine Dokumentation und/oder zusätzliche Komponenten, auch Hardware-Komponenten, wie z.B. Hardware-Schlüssel (Dongles etc.) zur Nutzung der Software, umfassen.

Zum Transport zur Steuereinrichtung und/oder zur Speicherung an oder in der Steuereinrichtung kann ein computerlesbares Medium, beispielsweise ein Memorystick, eine Festplatte oder ein sonstiger transportabler oder fest eingebauter Datenträger dienen, auf welchem die von einer Rechnereinheit der Steuereinrichtung einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen. Die Rechnereinheit kann zum Beispiel Teil einer autonomen Steuereinrichtung eines Schienenfahrzeugs sein.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung des erfindungsgemäßen Verfahrens zur Schienenerkennung von einem Schienenfahrzeug aus erfolgt der Schritt des Ermittelns eines Bildausschnitts auf Basis der Kenntnis der Position der Räder des Schienenfahrzeugs relativ zu der Lidar-Einheit. Vorteilhaft kann die Kenntnis der Position der Räder des Schienenfahrzeugs dazu genutzt werden, die Position der Schienen in Breitenrichtung zumindest in der Nähe des Schienenfahrzeugs zu ermitteln. Die Räder des Schienenfahrzeugs befinden sich auf den Schienen und somit gibt die Position der Räder auch die Position der Schienen insbesondere in Querrichtung an der Schienenfahrzeugposition an. Da der Schienenverlauf, wie bereits erwähnt, durch bekannte Schienenparameter bzw. bekannte Schienenparameterwertebereiche, welche die mögliche Position bzw. Lage der Schienen im Raum einschränken, bestimmt wird, lässt sich der Bildausschnitt, welcher den Schienenverlauf wiedergibt, entsprechend einschränken. Insbesondere im Nahbereich des Schienenfahrzeugs trifft dies zu. Je weiter Abtastpunkte von dem Schienenfahrzeug entfernt liegen, desto breiter in Querrichtung ist auch der Bereich einer möglichen Schienenposition, da die Schienen von einer geraden Linienführung in Abhängigkeit von der Entfernung von der geraden Linie immer weiter abweichen können.

Bevorzugt erfolgt das Ermitteln von Kandidatenpunkten auf Basis der Kenntnis der Höhe und der Intensität von Bildpunkten. Aufgrund des Hervorstehens der Schienen sollte die Intensität der Bildpunkte im Schienenbereich schwächer sein als in der unmittelbaren Umgebung. Da die Schienen höher oder für den Fall von Straßenbahnen oder bei Bahnübergängen tiefer als das sie umgebende Gleisbett liegen, kann diese Höhendifferenz als Indiz dafür gewertet werden, dass sich an dieser Stelle eine Schiene befindet. Wie erwähnt, ist die Intensität der Abtastpunkte im Bereich der Schienen besonders niedrig, da hier wenig Licht in Richtung der Sensorik reflektiert wird. Eine besonders niedrige Bildintensität kann also ebenfalls als Anzeichen auf eine Schiene interpretiert werden.

In einer Ausgestaltung des erfindungsgemäßen Verfahrens zur Schienenerkennung von einem Schienenfahrzeug aus erfolgt das Anpassen des Schienenmodells auf Basis eines RANSAC-Algorithmus (RANSAC = random sample consensus = Übereinstimmung mit einer zufälligen Stichprobe). Ein RANSAC-Algorithmus ist ein Algorithmus zur Schätzung eines Modells innerhalb einer Reihe von Messwerten mit Ausreißern und groben Fehlern. Wegen seiner Robustheit gegenüber Ausreißern wird er vor allem bei der Auswertung automatischer Messungen im Bereich des maschinellen Sehens eingesetzt. Hier unterstützt dieser Algorithmus durch Berechnung einer um Ausreißer bereinigten Datenmenge, des sogenannten Consensus Sets, Ausgleichsverfahren, wie zum Beispiel die Methode der kleinsten Quadrate, die bei einer größeren Anzahl von Ausreißern meist versagen. Vorteilhaft kann mit einem solchen Verfahren die Zuverlässigkeit des angepassten Schienenmodells verbessert werden.

Vorzugsweise erfolgt bei dem erfindungsgemäßen Verfahren das Ermitteln eines Bildausschnitts auf Basis einer der folgenden Größen:
- einer maximalen Steigung des Schienenverlaufs,
- einer maximalen Überhöhung der Schienen, insbesondere in Kurven,
- einer maximalen Kurvenkrümmung der Schienen,
- einer maximalen Änderung der Kurvenkrümmung der Schienen.

Die Maximalwerte der genannten Parameter legen einen Bildbereich fest, in dem sich die gesuchten Schienen befinden können bzw. müssen. Vorteilhafterweise kann unter Kenntnis dieser Parameter bzw. deren Wertebereichen der zu durchsuchende Abschnitt eingeschränkt werden und somit die zu verarbeitende Datenmenge reduziert werden und damit das Verfahren beschleunigt bzw. der Bedarf an eingesetzten Datenverarbeitungskapazitäten reduziert werden. Wird der Bildbereich in der Nähe des Schienenfahrzeugs noch durch die Position der Räder des Schienenfahrzeugs festgelegt, so verbreitert er sich entsprechend den genannten Parametern mit zunehmendem Abstand von dem Schienenfahrzeug immer weiter. Insgesamt lässt sich aber unter Berücksichtigung dieser Parameter ein zu verarbeitender Bildausschnitt einschränken, was infolge der geringeren Anzahl der zu verarbeitenden Bildpunkte zu einer verringerten Datenlast und damit zu einer verbesserten Datenverarbeitungsgeschwindigkeit beiträgt. Dies ist insbesondere für Echtzeitanforderungen, wie sie bei dem autonomen Betrieb von Schienenfahrzeugen gegeben sind, vorteilhaft.

Besonders bevorzugt wird bei dem Anpassen des Schienenmodells der bekannte Abstand zwischen den Schienen als einschränkende Bedingung verwendet. D.h., die Position und der Abstand der Schienen lässt ergibt zum Beispiel die Position der Schienenlinien direkt am Schienenfahrzeug bzw. vor den Rädern des Schienenfahrzeugs. Vorteilhaft kann aufgrund dieser Information der Rechenaufwand zur Ermittlung der Position und des Verlaufs parallel verlaufender Schienen reduziert werden.

In einer Ausgestaltung des erfindungsgemäßen Verfahrens kann für das Ermitteln eines Bildausschnitts eine vorbestimmte Abschnittslänge verwendet werden. Vorteilhaft kann aufgrund der beschränkten Größe des Aufnahmebereichs die bei der Anpassung des Schienenmodells zu verarbeitende Datenmenge reduziert werden. Mithin werden weniger Datenverarbeitungskapazitäten benötigt bzw. kann die Datenverarbeitung in kürzerer Zeit, gegebenenfalls sogar in Echtzeit erfolgen.

Die Erfindung wird im Folgenden unter Hinweis auf die beigefügten Figuren anhand von Ausführungsbeispielen noch einmal näher erläutert. Es zeigen:
FIG 1 ein Flussdiagramm, welches ein Verfahren zur Schienenerkennung gemäß einem Ausführungsbeispiel der Erfindung veranschaulicht,
FIG 2 eine schematische Darstellung eines auf Lidar-Daten basierenden Abtastbilds von einem Schienenstrang gemäß einem Ausführungsbeispiel der Erfindung,
FIG 3 eine schematische Darstellung eines Ausschnitts der in FIG 2 gezeigten Darstellung gemäß einem Ausführungsbeispiel der Erfindung,
FIG 4 eine schematische Darstellung des in FIG 3 gezeigten Ausschnitts mit eingezeichneten Schienenpunkten,
FIG 5 eine schematische Darstellung der in FIG 4 gezeigten Darstellung mit angepassten Schienenlinien gemäß einem Ausführungsbeispiel der Erfindung,
FIG 6 eine schematische Darstellung eines auf Lidar-Daten basierenden Abtastbilds von einem Schienenstrang mit einer Weiche,
FIG 7 eine schematische Darstellung eines auf Lidar-Daten basierenden Abtastbilds von einer Eisenbahnstrecke mit zwei parallel verlaufenden Schienensträngen,
FIG 8 eine schematische Darstellung einer Schienenerkennungseinrichtung gemäß einem Ausführungsbeispiel der Erfindung,
FIG 9 eine schematische Darstellung eines Schienenfahrzeugs gemäß einem Ausführungsbeispiel der Erfindung.

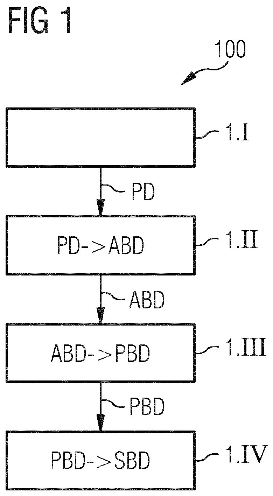

In FIG 1 ist ein Flussdiagramm 100 gezeigt, welches ein Verfahren zur Schienenerkennung gemäß einem Ausführungsbeispiel der Erfindung veranschaulicht.

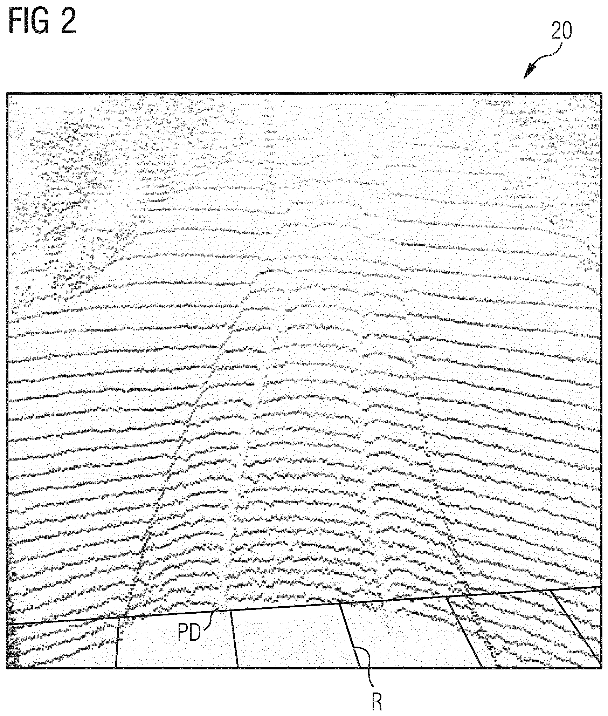

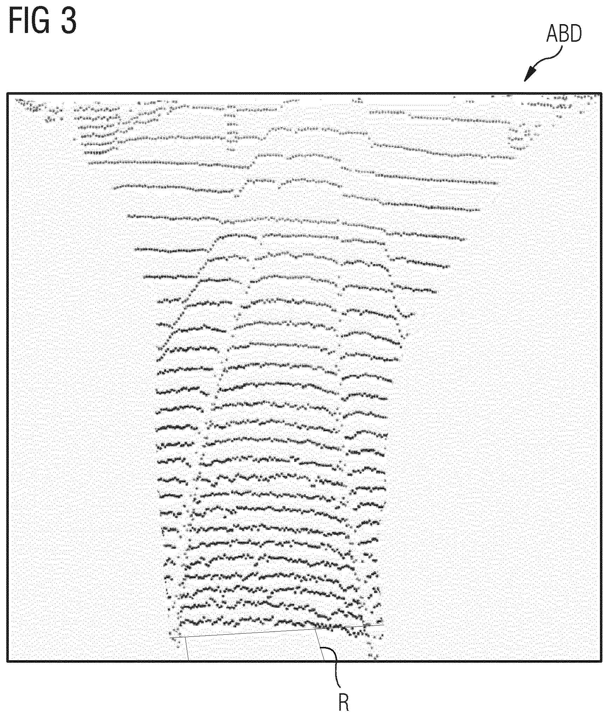

Bei dem Schritt 1.I erfolgt eine Abtastung einer Schienenstrecke mit Hilfe eines Lidar-Systems, welches in einem Schienenfahrzeug installiert ist. Dabei werden Millionen von Punkten abgetastet. Diese erfassten Punktdaten PD werden von der Umgebung des Schienenfahrzeugs erzeugt. Derartige Punktdaten sind in FIG 2 zu erkennen. Bei dem Schritt 1.II wird ein Ausschnitt ABD aus den Punktdaten PD gewonnen, in dem die Strecke bzw. der Schienenstrang vor dem Schienenfahrzeug liegen muss. Dieser Ausschnitt ABD kann zum Beispiel auf Basis der Kenntnis der Position der Räder relativ zu den Bilddaten bzw. Punktdaten PD, der Beschränkung der Kurvenkrümmung, der Steigung sowie der Überhöhung von Kurven ermittelt werden. Ein solcher Ausschnitt ist in FIG 3 zu erkennen.

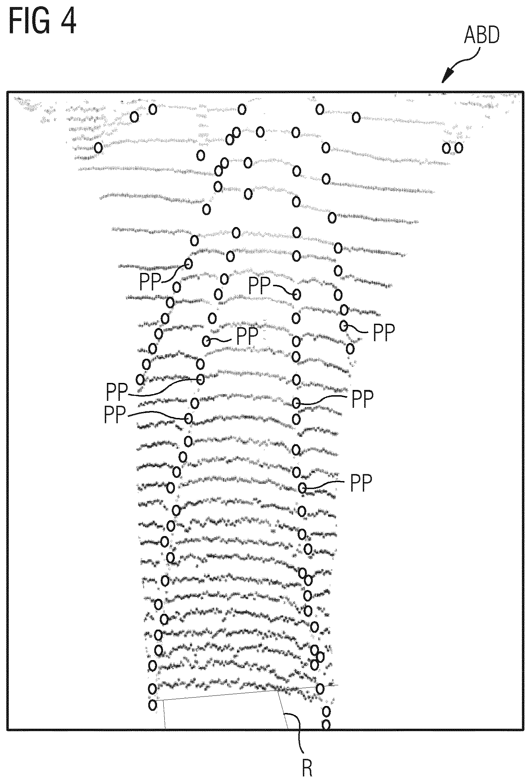

Bei dem Schritt 1.III werden Schienenpunktdaten PBD auf Basis der bei dem Schritt 1.II erzeugten Ausschnittdaten ABD erzeugt. Dabei erfolgt nun ein Vorschlag, an welcher Stelle sich eine Schiene befinden könnte. Hierzu werden Punkte PP in den ausgeschnittenen Bilddaten ABD eingezeichnet, was in FIG 4 zu erkennen ist. Diese Punkte PP werden an Stellen eingezeichnet, die eine Höhendifferenz von ungefähr der Höhe von Schienen relativ zur Umgebung aufweisen. Auch die Intensitätsinformation kann dazu genutzt werden, um Schienenpunkte PP zu erkennen. Allerdings lässt dieser Effekt mit zunehmender Entfernung nach, da dann die Seiten der Schienen anstatt der Oberseite der Schienen von den Lidar-Strahlen getroffen werden. Dieser Effekt tritt besonders bei Kurven auf. Für Kurven, die weiter entfernt von dem Schienenfahrzeug sind, kann auch das Ermitteln einer großen Differenz der x-y-Positionen von aufeinanderfolgenden Punkten, welche zu demselben Lidarring gehören, ohne große Höhendifferenzen aufzuweisen, genutzt werden, um mögliche Punkte zu ermitteln, die zu den Schienen gehören.

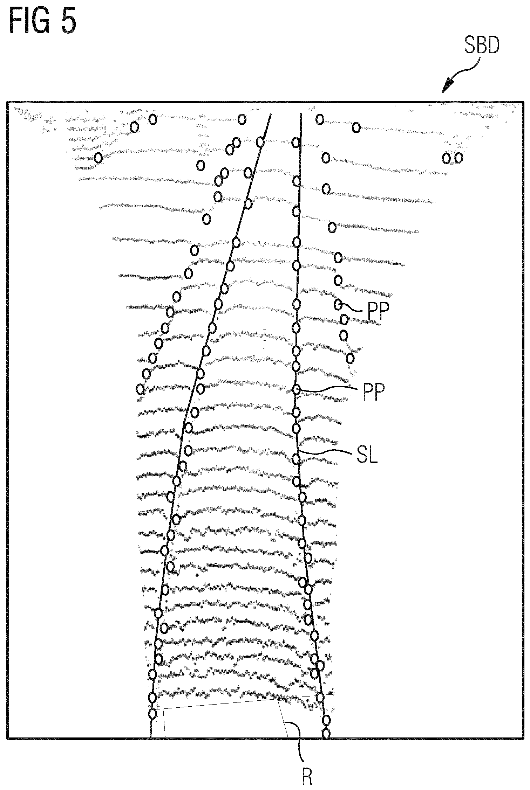

Bei dem Schritt 1.IV erfolgt ein Anpassvorgang, bei dem ein Schienenmodell SBD an die vorgeschlagenen Punkte PP angepasst wird. Hierzu kann zum Beispiel ein RANSAC-Verfahren genutzt werden, um zwei parallele Kurven an die bei dem Schritt 1.III ermittelten Punkte PP anzupassen. Punkte PP, die eine Kurve bilden, welche parallel zu den Schienen verläuft, deren Abstand zu einer Schiene aber nicht mit der erwarteten Schienenbreite übereinstimmt, können außer Acht gelassen werden. Die genannten Prozessschritte können auch abschnittsweise erfolgen, um die Menge der Punkte einer auszuwertenden Punktwolke zu reduzieren. Die bei dem Anpassvorgang erzeugten Kurven SBD, welche den detektierten Schienenverlauf repräsentieren, sind in FIG 5 gezeigt.

In FIG 2 ist eine Darstellung 20 eines mit Hilfe eines Lidar-Sensors aufgenommenen Bilds aus einer Punktwolke gezeigt, welches einen Umgebungsabschnitt vor einem Schienenfahrzeug veranschaulicht. Einzelne Punkte PD weisen unterschiedliche Grautöne auf, die eine unterschiedliche Intensität der erfassten Lidar-Signale repräsentieren. In der Darstellung 20 lassen sich Niveauunterschiede erkennen, die einen Bahndamm mit einem Gleiskörper andeuten. Im oberen Bildbereich lassen sich seitlich von dem Bahndamm schemenhaft Signalmasten und andere Objekte erkennen. Im unteren Bereich der Darstellung 20 ist ein Raster R eingezeichnet, mit dem Abstände zwischen einzelnen Objekten oder Punkten ermittelbar sind. Wie in FIG 2 zu erkennen ist, sind die beiden Schienen etwas mehr als eine Rasterlänge voneinander entfernt.

In FIG 3 ist ein Ausschnitt ABD der in FIG 2 gezeigten Darstellung 20 veranschaulicht. Der gezeigte Ausschnitt ABD umfasst den Abschnitt, welcher auf Basis vorbekannter Restriktionen den Bereich darstellt, in dem die Schienen zu suchen sind. Beispielsweise ergeben sich die Startpunkte der Schienen im unteren Bildbereich aus den Positionen der Räder des Schienenfahrzeugs. Anhand bekannter Einschränkungen für den weiteren Verlauf der Schienen lässt sich mithin ein mit zunehmendem Abstand zum Schienenfahrzeug immer breiter werdender Bereich festlegen, in dem sich die Schienen befinden müssen.

In FIG 4 ist der in FIG 3 bereits veranschaulichte Abschnitt ABD mit einer Vielzahl von eingetragenen Schienenkandidatenpunkten PP gezeigt. Die Schienenkandidatenpunkte PP können zum Beispiel anhand der Höhendifferenz, die sie zur Umgebung aufweisen, ermittelt werden. Die Höhendifferenz sollte ungefähr der Höhe einer Schiene entsprechen. Auch ein Intensitätsunterschied in Querrichtung kann als Hinweis auf einen Schienenkandidatenpunkt PP verwendet werden.

In FIG 5 ist eine schematische Darstellung der in FIG 4 gezeigten Darstellung mit einem Schienenmodell SBD, welches an die ermittelten Schienenpunkte PP angepasste Schienenlinien SL umfasst, gemäß einem Ausführungsbeispiel der Erfindung veranschaulicht. Die Schienenlinien SL können mit Hilfe eines RANSAC-Algorithmus auf Basis der vorab ermittelten Schienenkandidatenpunkte PP ermittelt werden.

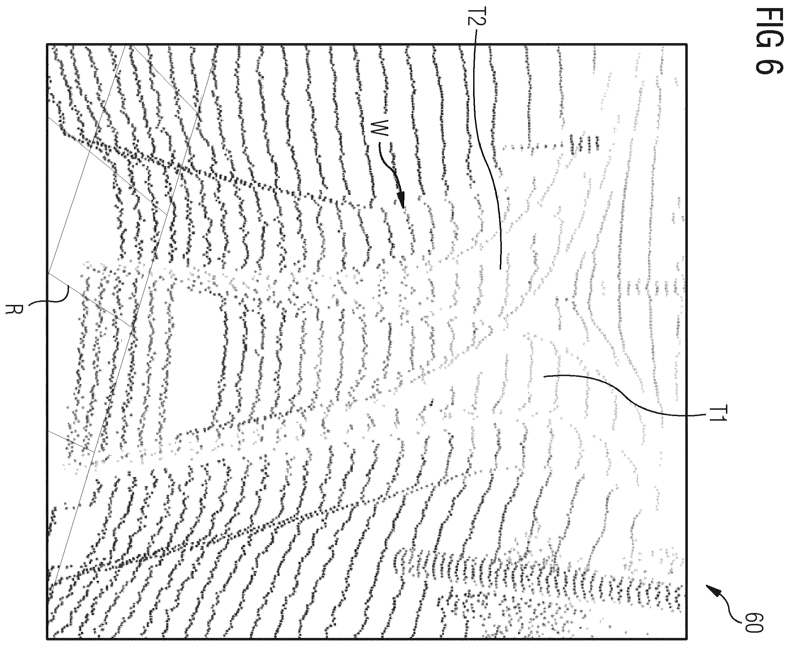

In FIG 6 ist eine Schienenstrecke 60 mit einer Weiche W gezeigt, von der zwei sich voneinander entfernende Schienenstränge T1, T2 abgehen. Werden kürzere Segmente untersucht, so können beide Abzweigungen detektiert werden. Eine solche Abzweigung kann zum Beispiel aufgrund schlechter Anpassung im Anpassungsschritt (Schritt 1.IV) oder durch eine große Anzahl von danebenliegenden Punkten, d.h. Punkten, die nicht durch ein Schienenmodell einer eingleisigen Strecke angenähert werden können, erkannt werden. Der Schritt 1.II, also die Festlegung eines Bildausschnitts ABD, kann auf beide Abzweigungen angewendet werden, um die möglichen Abzweigungen der Schienen zu bearbeiten. Die Festlegung der Bildausschnitte ABD für die Abzweigungen kann zum Beispiel auf Basis einer bekannten Geometrie einer Weiche erfolgen. Anschließend werden die übrigen Schritte (1.III, 1.IV) für beide Abzweigungen getrennt durchgeführt.

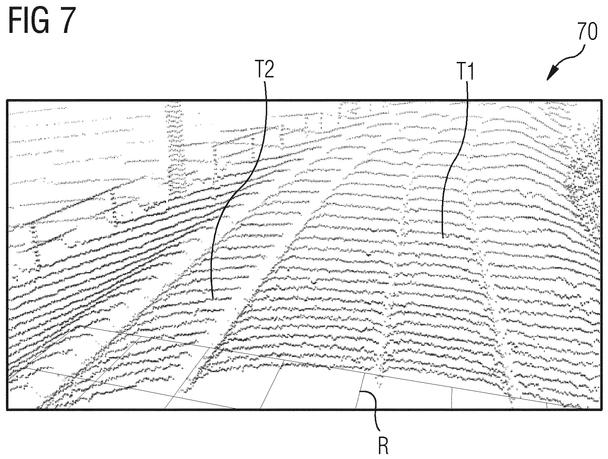

In FIG 7 ist eine Schienenstrecke 70 mit zwei separaten parallelen Schienensträngen T1, T2 gezeigt. In einem solchen Fall muss der Abtastbereich ABD entsprechend in der Breite ausgedehnt werden, um beide Schienenstränge zu erfassen.

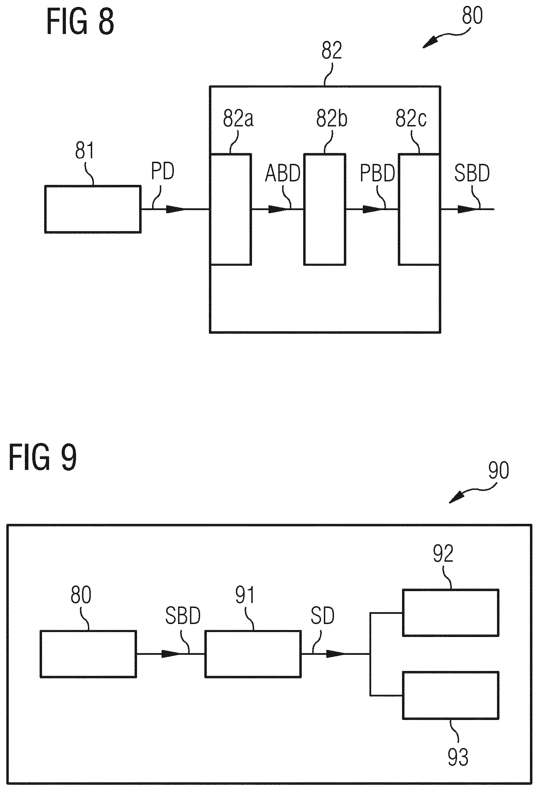

In FIG 8 ist eine schematische Darstellung einer Schienenerkennungseinrichtung 80 gemäß einem Ausführungsbeispiel der Erfindung gezeigt.

Die Schienenerkennungseinrichtung 80 weist eine Lidar-Einheit 81 zum Erfassen von Punktdaten PD auf. Teil der Schienenerkennungseinrichtung 80 ist auch eine Auswertungseinrichtung 82. Die Auswertungseinrichtung 82 umfasst eine Festlegungseinheit 82a zum Ermitteln eines Bildausschnitts ABD, welcher einen Schienenstrang umfasst. Teil der Auswertungseinrichtung 82 ist auch eine Punktermittlungseinheit 82b zum Ermitteln von Kandidatenpunkten PP in dem Bildausschnitt ABD. Die Daten PBD mit den Kandidatenpunkten PP werden an eine Modellierungseinheit 82c übermittelt, die dem Anpassen eines Schienenmodells auf Basis der Kandidatenpunkte PP dient. Von der Auswertungseinrichtung 82 werden auf Schienenpositionsdaten basierende Schienenmodelldaten SBD ausgegeben, die beispielsweise von einer Steuereinrichtung eines autonomen Schienenfahrzeugs weiterverarbeitet werden können.

In FIG 9 ist ein solches Schienenfahrzeug 90 schematisch dargestellt, welches die in FIG 8 gezeigte Schienenerkennungseinrichtung 80 umfasst. Die von der Schienenerkennungseinrichtung 80 ermittelten Schienenpositionsdaten bzw. das auf den ermittelten Schienenpositionsdaten basierende Schienenmodell SBD wird an eine von dem Schienenfahrzeug 90 umfasste Steuereinrichtung 91 übermittelt, welche auf Basis dieser Schienenpositionsdaten durch Übermitteln von Steuerdaten SD eine Ansteuerung eines Motors 92 und von Bremsen 93 automatisiert durchführt.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zur Schienenerkennung von einem Schienenfahrzeug (90) aus, aufweisend die Schritte:
- Erfassen von Punktdaten (PD) durch eine Lidar-Einheit (81) von einem Frontbereich vor dem Schienenfahrzeug (90), wobei der Frontbereich durch die Lidar-Einheit ringförmig abgetastet wird, wobei jeder Lidarring einen unterschiedlichen Abstand zu einem Sensor der Lidar-Einheit aufweist,
- Ermitteln eines Bildausschnitts (ABD), welcher einen Schienenstrang umfasst, auf Basis der Punktdaten (PD),
- Ermitteln von Kandidatenpunkten (PP) in dem Bildausschnitt (ABD),
- Ermitteln eines Schienenmodells (SBD) auf Basis der Kandidatenpunkte (PP),
- wobei die Kandidatenpunkte (PP) in Abhängigkeit davon ermittelt werden, ob Punktdaten (PD) mit sehr unterschiedlichen x-y-Werten aber demselben Höhenwert und auf demselben Lidarring auftreten, wobei eine x-y-Ebene als senk-recht auf dem Schwerkraftvektor liegend definiert wird.

2. Verfahren nach Anspruch 1, wobei der Schritt des Ermittelns eines Bildausschnitts (ABD) auf Basis der Kenntnis der Position der Räder des Schienenfahrzeugs (80) relativ zu der Lidar-Einheit (81) erfolgt.

3. Verfahren nach Anspruch 1 oder 2, wobei das Ermitteln von Kandidatenpunkten (PP) auf Basis der Kenntnis der Höhe und der Intensität von Bildpunkten (PD) erfolgt.

4. Verfahren nach einem der vorstehenden Ansprüche, wobei das Ermitteln des Schienenmodells (SBD) auf Basis eines RANSAC-Algorithmus erfolgt.

5. Verfahren nach einem der vorstehenden Ansprüche, wobei das Ermitteln eines Bildausschnitts (ABD) auf Basis der Kenntnis einer maximalen Steigung und/oder einer maximalen Überhöhung und/oder einer maximalen Kurvenkrümmung der Schienen erfolgt.

6. Verfahren nach einem der vorstehenden Ansprüche, wobei die Kenntnis der maximalen Änderung der Kurvenkrümmung der Schienen zum Ermitteln des Bildausschnitts (ABD) genutzt wird.

7. Verfahren nach einem der vorstehenden Ansprüche, wobei beim Ermitteln des Schienenmodells das Schienenmodell (SBD) an die Kandidatenpunkte (PP) angepasst wird, und bei dem Anpassen des Schienenmodells (SBD) ein bekannter Abstand zwischen den Schienen als einschränkende Bedingung verwendet wird.

8. Verfahren nach einem der vorstehenden Ansprüche, wobei für das Ermitteln eines Bildausschnitts (ABD) eine vorbestimmte Abschnittslänge verwendet wird.

9. Schienenerkennungseinrichtung (80), aufweisend:
- eine Lidar-Einheit (81) zum Erfassen von Punktdaten (PD) von einem Frontbereich vor einem Schienenfahrzeug (90) durch ringförmiges Abtasten des Frontbereichs, sodass Lidarringe mit jeweils unterschiedlichen Abständen zu einem Sensor der Lidar-Einheit erfasst werden,
- eine Festlegungseinheit (82a) zum Ermitteln eines Bildausschnitts (ABD), welcher einen Schienenstrang umfasst, auf Basis der Punktdaten (PD),
- eine Punktermittlungseinheit (82b) zum Ermitteln von Kandidatenpunkten (PP) in dem Bildausschnitt (ABD),
- eine Modellierungseinheit (82c) zum Ermitteln eines Schienenmodells (SBD) auf Basis der Kandidatenpunkte (PP),
- wobei die Punktermittlungseinheit konfiguriert ist, die Kandidatenpunkte (PP) in Abhängigkeit davon zu ermitteln, ob Punktdaten (PD) mit sehr unterschiedlichen x-y-Werten aber demselben Höhenwert und auf demselben Lidarring auftreten, wobei eine x-y-Ebene als senkrecht auf dem Schwerkraftvektor liegend definiert wird.

10. Schienenfahrzeug (90), aufweisend eine Schienenerkennungseinrichtung (80) nach Anspruch 9.

11. Computerprogrammprodukt mit einem Computerprogramm, welches direkt in eine Speichereinheit eines mit einer Schienenerkennungseinrichtung nach Anspruch 9 oder 10 ausgerüsteten Schienenfahrzeugs ladbar ist, mit Programmabschnitten, um alle Schritte eines Verfahrens nach einem der Ansprüche 1 bis 8 auszuführen, wenn das Computerprogramm in dem Schienenfahrzeug ausgeführt wird.

12. Computerlesbares Medium, auf welchem von einer Rechnereinheit ausführbare Programmabschnitte gespeichert sind, um alle Schritte des Verfahrens nach einem der Ansprüche 1 bis 8 auszuführen, wenn die Programmabschnitte von der Rechnereinheit ausgeführt werden, die auf einem mit einer Schienenerkennungseinrichtung nach Anspruch 9 oder 10 ausgerüsteten Schienenfahrzeug vorgesehen ist.

## Claims

1. Method for rail recognition from a rail vehicle (90), having the steps:
- detecting point data (PD) from a front area in front of the rail vehicle (90) by way of a LiDAR unit (81), wherein the front area is scanned by the LiDAR unit in an annular manner, wherein each LiDAR ring has a different spacing from a sensor of the LiDAR unit,
- determining an image section (ABD), which comprises a rail section, on the basis of the point data (PD),
- determining candidate points (PP) in the image section (ABD),
- determining a rail model (SBD) on the basis of the candidate points (PP),
- wherein the candidate points (PP) are determined depending on whether point data (PD) emerges on the same LiDAR ring which has very different x-y values but which has the same height value, wherein an x-y plane is defined as lying perpendicular to the vector of the force of gravity.

2. Method according to claim 1, wherein the step of determining an image section (ABD) takes place on the basis of the knowledge of the position of the wheels of the rail vehicle (80) relative to the LiDAR unit (81).

3. Method according to claim 1 or 2, wherein determining candidate points (PP) takes place on the basis of the knowledge of the height and the intensity of image points (PD) .

4. Method according to one of the preceding claims, wherein determining the rail model (SBD) takes place on the basis of a RANSAC algorithm.

5. Method according to one of the preceding claims, wherein determining an image section (ABD) takes place on the basis of the knowledge of a maximum increase and/or a maximum camber and/or a maximum curve of the rails.

6. Method according to one of the preceding claims, wherein the knowledge of the maximum change in the curve of the rails is used to determine the image section (ABD).

7. Method according to one of the preceding claims, wherein the rail model (SBD) is adjusted to the candidate points (PP) during the determination of the rail model, and during the adjustment of the rail model (SBD), a known spacing between the rails is used as a limiting condition.

8. Method according to one of the preceding claims, wherein a predefined section length is used for determining an image section (ABD).

9. Rail recognition facility (80), having:
- a LiDAR unit (81) for detecting point data (PD) from a front area in front of the rail vehicle (90) by way of scanning the front area in an annular manner, so that LiDAR rings are detected with different spacings from a sensor of the LiDAR unit in each case,
- a definition facility (82a) for determining an image section (ABD), which comprises a rail section, on the basis of the point data (PD),
- a point determination unit (82b) for determining candidate points (PP) in the image section (ABD),
- a modelling unit (82c) for determining a rail model (SBD) on the basis of the candidate points (PP),
- wherein the point determination unit is configured to determine the candidate points (PP) depending on whether point data (PD) emerges on the same LiDAR ring which has very different x-y values but which has the same height value, wherein an x-y plane is defined as lying perpendicular to the vector of the force of gravity.

10. Rail vehicle (90), having a rail detection facility (80) according to claim 9.

11. Computer program product with a computer program, which can be loaded directly into a storage unit of a rail vehicle equipped with a rail detection facility according to claim 9 or 10, with program sections for carrying out all the steps of a method according to one of claims 1 to 8 when the computer program is executed in the rail vehicle.

12. Computer-readable medium, on which program sections which can be executed by a computer unit are stored in order to carry out all the steps of the method according to one of claims 1 to 8, when the program sections are executed by the computing unit, which is provided on a rail vehicle equipped with a rail detection facility according to claim 9 or 10.

## Revendications

1. Procédé de reconnaissance de rails à partir d'un véhicule (90) ferroviaire, comportant les stades :
- détection de données (PD) de points par une unité (81) lidar d'une partie avant devant le véhicule (90) ferroviaire, dans lequel on échantillonne annulairement la partie avant par l'unité lidar, dans lequel chaque anneau lidar a une distance différente à un capteur de l'unité lidar,
- détermination d'une partie (ABD) d'image, qui comprend une file de rail, sur la base des données (PD) de points,
- détermination de points (PP) candidats dans la partie (ABD) d'image,
- détermination d'un modèle (SBD) de rail sur la base des points (PP) candidats,
- dans lequel on détermine les points (PP) candidats en fonction du point de savoir s'il apparaît des données (PD) de points ayant des valeurs x-y très différentes, mais une même valeur en hauteur et sur le même anneau lidar, un plan x-y étant défini comme perpendiculaire au vecteur de la force de gravité.

2. Procédé suivant la revendication 1, dans lequel le stade de détermination d'une partie (ABD) d'image s'effectue sur la base de la connaissance de la position des roues du véhicule (80) ferroviaire par rapport à l'unité (81) lidar.

3. Procédé suivant la revendication 1 ou 2, dans lequel la détermination de points (PP) candidats s'effectue sur la base de la connaissance de la hauteur et de l'intensité des points (PD) de l'image.

4. Procédé suivant l'une des revendications précédentes, dans lequel la détermination du modèle (SBD) de rail s'effectue sur la base d'un algorithme RANSAC.

5. Procédé suivant l'une des revendications précédentes, dans lequel la détermination d'une partie (ABD) d'image s'effectue sur la base d'une connaissance d'une pente maximum et/ou d'une surélévation maximum et/ou d'une courbure maximum des rails.

6. Procédé suivant l'une des revendications précédentes, dans lequel on utilise la connaissance de la variation maximum de la courbure des rails pour la détermination de la partie (ABD) d'image.

7. Procédé suivant l'une des revendications précédentes, dans lequel, lors de la détermination du modèle de rail, on adapte le modèle (SBD) de rail aux points (PP) candidats, et lors de l'adaptation du modèle (SBD) de rail, on utilise une distance connue entre les rails comme condition limitative.

8. Procédé suivant l'une des revendications précédentes, dans lequel, pour la détermination d'une partie (ABD) d'image, on utilise une longueur de tronçon déterminée à l'avance.

9. Dispositif (80) de reconnaissance de rails, comportant :
- une unité (81) lidar de détection de données (PD) de points d'une partie avant devant un véhicule (90) ferroviaire par échantillonnage annulaire de la partie avant, de manière à détecter des anneaux lidar ayant respectivement des distances différentes à un capteur de l'unité lidar,
- une unité (82a) de repérage pour la détermination d'une partie (ABD) d'image, qui comprend une file de rail, sur la base des données (PD) de points,
- une unité (82b) de détermination de points (PP) candidats dans la partie (ABD) d'image,
- une unité (82c) de modélisation de détermination d'un modèle (SBD) de rail sur la base des points (PP) candidats,
- dans lequel l'unité de détermination de points est configurée pour déterminer les points (PP) candidats en fonction du point savoir s'il apparaît des données (PD) de points ayant des valeurs x-y très différentes, mais une même valeur en hauteur et sur le même anneau lidar, un plan x-y étant défini comme perpendiculaire au vecteur de la force de gravité.

10. Véhicule (90) ferroviaire, comportant un dispositif (80) de reconnaissance de rails suivant la revendication 9.

11. Produit de programme d'ordinateur, comprenant un programme d'ordinateur, qui peut être chargé directement dans une unité de mémoire d'un véhicule ferroviaire équipé d'un dispositif de reconnaissance de rails suivant la revendication 9 ou 10, comprenant des parties de programme pour exécuter tous les stades d'un procédé suivant l'une des revendications 1 à 8, lorsque le programme d'ordinateur est exécuté dans le véhicule ferroviaire.

12. Support, déchiffrable par ordinateur, sur lequel sont mises en mémoire des parties de programme pouvant être exécutées par une unité informatique, afin d'exécuter tous les stades du procédé suivant l'une des revendications 1 à 8, lorsque les parties de programme sont exécutées par l'unité informatique, qui est prévue sur un véhicule ferroviaire équipé d'un dispositif de reconnaissance de rails suivant la revendication 9 ou 10.
